# EUROPÄISCHE PATENTSCHRIFT

(11) **EP 4 405 659 B1**
(45) Veröffentlichungstag und Bekanntmachung des Hinweises auf die Patenterteilung: **18.03.2026**
(21) Anmeldenummer: 22793691.1
(22) Anmeldetag: 21.09.2022
(51) Int. Cl.: G01N 15/02, B27N 1/02, G01N 15/14

(54) **VERFAHREN UND VORRICHTUNG ZUR BESTIMMUNG EINES PARAMETERS EINER GRÖSSENVERTEILUNG EINES GEMISCHS, ANLAGE ZUR HERSTELLUNG VON WERKSTOFFPLATTEN UND COMPUTERPROGRAMMPRODUKT**
METHOD AND DEVICE FOR DETERMINING A PARAMETER OF A SIZE DISTRIBUTION OF A MIXTURE, PLANT FOR MANUFACTURING MATERIAL BOARDS, AND COMPUTER PROGRAMME PRODUCT
PROCÉDÉ ET DISPOSITIF DE DÉTERMINATION D'UN PARAMÈTRE D'UNE RÉPARTITION DIMENSIONNELLE D'UN MÉLANGE, INSTALLATION DE FABRICATION DE PANNEAUX DE MATÉRIAU ET PRODUIT-PROGRAMME D'ORDINATEUR

(30) Priorität: 24.09.2021 DE 102021124782
(43) Veröffentlichungstag der Anmeldung: 31.07.2024
(73) Patentinhaber: DIEFFENBACHER GMBH Maschinen- und Anlagenbau, 75031 Eppingen (DE)
(72) Erfinder: WOLL, Jürgen, 75031 Eppingen (DE); BÄR, Jan, 75031 Eppingen (DE); BARTSCH, Marcel, 75031 Eppingen (DE)
(74) Vertreter: LBP Lemcke, Brommer & Partner Patentanwälte mbB
(86) Internationale Anmeldenummer: PCT/EP2022/076150
(87) Internationale Veröffentlichungsnummer: WO 2023/046711

(56) Entgegenhaltungen:
- JP-A- 2008 046 077
- JP-A- H05 164 677
- JP-A- H06 167 438
- JP-B2- 5 253 059
- US-A1- 2007 222 100

## Beschreibung

Die Erfindung betrifft ein Verfahren zur Bestimmung eines Parameters einer Größenverteilung eines Gemischs nach Anspruch 1 und eine Vorrichtung zur Bestimmung eines Parameters einer Größenverteilung eines Gemischs nach Anspruch 11. Weiter betrifft die Erfindung eine Anlage zur Herstellung einer Werkstoffplatte aus einem Gemisch aus Partikeln nach Anspruch 13 sowie ein Computerprogrammprodukt gemäß Anspruch 16.

Gemische aus einem oder mehreren Materialien bilden in vielfältigen Anwendungen der Ausgangspunkt für die Herstellung weiterer Produkte. Beispielsweise bilden bei der Herstellung von Werkstoffplatten Gemische aus Partikeln eines Ausgangsmaterial die wesentliche Grundlage zur Bildung solcher Werkstoffplatte. Gerade die Zusammensetzung und Eigenschaften des Gemischs haben hierbei maßgeblichen Einfluss auf die Qualität und die Eigenschaften der herzustellenden Werkstoffplatte.

Bei der Herstellung von Holzwerkstoffplatten, insbesondere von Spanplatten werden Gemische mit Partikeln aus lignozellulosehaltigen Material verwendet, wobei die Partikel innerhalb des Gemischs unterschiedliche Eigenschaften, insbesondere eine unterschiedliche Größe bzw. Länge, aufweisen. Die Größe der Partikel hat jedoch gerade bei Spanplatten einen wesentlichen Einfluss auf die Festigkeiten der Werkstoffplatte, beispielsweise die Biegefestigkeit, wie auch die benötigte Menge an Leim, welche mit einer Oberfläche der Partikel korreliert, die wiederum wesentlich von der Größe und insbesondere der Länge der Partikel beeinflusst wird. Daher ist die Bestimmung der Größenverteilung eines solchen Gemischs von besonderer Bedeutung.

Zur Bestimmung dieser Größenverteilung ist die Durchführung einer Siebanalyse bekannt. Hierzu wird eine Probe des Gemischs aus dem Prozess zur Herstellung von Werkstoffplatten genommen und in einem Siebsystem in eine Mehrzahl von Fraktionen, welche jeweils einen Größenbereich abbilden, aufgeteilt. Auf Basis der einzelnen Fraktionen wird das Verhältnis dieser zueinander bestimmt und dem weiteren Prozess bis zur nächsten Analyse zu Grunde gelegt. Die Siebanalyse ist einerseits sehr aufwändig und benötigt zudem Zeit für das Sieben, Analysieren und Bestimmen der Größenverteilung. Zudem ermöglicht die Siebanalyse nur eine Momentaufnahme.

Die US 2007/0222100 A1 offenbart ein Verfahren und System, das Nahinfrarotspektroskopie zur Inline-Überwachung und Steuerung des Anteils von Harzfeststoffen und anderen Zusatzstoffen in einem Bindemittelgemisch in der kontinuierlichen Produktion von Werkstoffplatten verwendet. Hierbei werden Prozessvariablen des Bindemittelgemischs in Echtzeit dynamisch angepasst, um gewünschte Harzladungsniveaus aufrechtzuerhalten und so die Gleichmäßigkeit und Qualität des Endprodukts zu verbessern.

Es ist die Aufgabe der Erfindung ein Verfahren und eine Vorrichtung sowie eine Anlage und ein Computerprogrammprodukt anzugeben, welche es ermöglicht den Parameter einer Größenverteilung einfach zu ermitteln, insbesondere während eines Produktionsprozesses.

Gelöst wird diese Aufgabe durch ein Verfahren gemäß Anspruch 1 sowie durch eine Vorrichtung gemäß Anspruch 11. Weiter wird die Aufgabe auch gelöst durch eine Anlage gemäß Anspruch 13 sowie ein Computerprogrammprodukt gemäß Anspruch 16.

Vorteilhafte Ausgestaltungen des erfindungsgemäßen Verfahrens finden sich in den Ansprüchen 2 bis 10. Vorteilhafte Ausgestaltungsformen der erfindungsgemäßen Vorrichtung findet sich in Anspruch 12. Vorteilhafte Ausgestaltungsformen der erfindungsgemäßen Anlage finden sich in den Ansprüchen 14 und 15. Hiermit wird der Wortlaut sämtlicher Ansprüche explizit per Referenz in die Beschreibung miteinbezogen.

Das erfindungsgemäße Verfahren ist vorzugsweise zur Durchführung mittels der erfindungsgemäßen Vorrichtung oder einer bevorzugten Ausführungsform der Vorrichtung ausgebildet. Die erfindungsgemäße Vorrichtung ist vorzugsweise zur Durchführung des erfindungsgemäßen Verfahrens oder einer bevorzugten Ausführungsform des erfindungsgemäßen Verfahrens ausgebildet.

Die Aufgabe wird gelöst durch ein Verfahren zur Bestimmung zumindest eines Parameters einer Größenverteilung eines Gemischs aus Partikeln im Zuge der Herstellung von Werkstoffplatten, umfassend die Schritte:
A. Erstellen zumindest einer Aufnahme des Gemischs mit einem optischen System;
B. Übermitteln der zumindest einen Aufnahme an eine Auswerteeinrichtung und Erzeugen zumindest einer Ausgangskennlinie aus der zumindest einen Aufnahme, wobei die zumindest eine Ausgangskennlinie durch eine mathematische Transformation der zumindest einen Aufnahme, bevorzugt durch eine Fourier-Transformation, gebildet wird und einen Verlauf einer Intensität, bevorzugt einer normierten Intensität, über einer Raumfrequenz darstellt,
C. Ermittlung zumindest einer Näherungskennlinie in der Auswerteeinrichtung durch Approximation derart, dass die zumindest eine Näherungskennlinie im Wesentlichen mit der zumindest einen Ausgangskennlinie zusammenfällt oder zumindest in Bereichen im Wesentlichen übereinstimmt, wobei die zumindest eine Näherungskennlinie zumindest auf einer Geometrie der Partikel basiert oder von dieser abhängt, und
D. Bestimmung des zumindest einen Parameters der Größenverteilung des Gemischs aus der zumindest einen Näherungskennlinie und/oder Ausgangskennlinie.

Für die Bestimmung des zumindest einen Parameters der Größenverteilung, beispielsweise die Größenverteilung selbst, ist es nun nicht mehr erforderlich eine Teilmenge des Gemischs auszuschleusen und zu analysieren. Vielmehr kann direkt aus der Aufnahme des Gemischs eine Ausgangskennlinie gebildet werden, welche es ermöglicht den zumindest einen Parameter der Größenverteilung des Gemischs daraus abzuleiten oder unmittelbar zu bestimmen. Hierdurch wird einerseits viel Zeit gespart, da die Analyse sehr viel schneller durchgeführt werden kann. Andererseits kann eine Bestimmung auch viel öfter erfolgen, da die Daten nun viel schneller und mit weniger Aufwand erfassbar sind. Somit kann auch auf die nachfolgen Prozesse sehr viel schneller Einfluss genommen werden, indem beispielsweise weitere Parameter in Abhängigkeit des ermittelten Parameters der Größenverteilung des Gemischs angepasst werden. Zudem ermöglicht eine schnellere und öfter durchgeführte Analyse die Feststellung von Fehlern in den vorausgegangenen Prozessen im Rahmen der Herstellung des Gemischs, beispielsweise von stumpfen Werkzeugen bei der Herstellung der Partikel. Die mathematische Transformation, insbesondere die Fourier-Transformation, ermöglicht auch die Bestimmung von kleinen Partikeln innerhalb des Gemischs, insbesondere bei einer Partikelgröße kleiner 0,5mm, welche bei einer direkten Auswertung der Aufnahme auf Grund der Partikelgröße nicht problemlos möglich ist.

Bei einem Parameter einer Größenverteilung eines Gemischs aus Partikeln handelt es sich beispielsweise um die Größenverteilung der Partikel im Gemisch selbst, die Streubreite der Größenverteilung der Partikel oder den Mittelwert bzw. eine rechnerisch ermittelte mittlere Partikelgröße des Gemischs.

Bei dem optischen System kann es sich insbesondere um jede Einrichtung zur Erstellung einer Aufnahme zumindest der Oberfläche des Gemischs, bevorzugt nur der Oberfläche des Gemischs handelt. Damit kann das optische System eine Kamera, insbesondere eine schwarz/weiß Kamera, sein. Bevorzugt arbeitet das optische System im sichtbaren Spektralbereich oder umfasst diesen zumindest teilweise. Auch die Verwendung von Strahlung außerhalb des sichtbaren Bereichs zur Erfassung einer Aufnahme des Gemischs, beispielsweise von Röntgenstrahlung, kann als Basis für ein entsprechendes optisches System dienen.

Die Auswerteeinheit kann bevorzugt eine eigenständige Einheit bilden oder in eine Steuereinrichtung einer Anlage, insbesondere einer Anlage zur Herstellung von Werkstoffplatten, integriert oder in dieser umfasst sein.

Vorzugsweise kann der zumindest eine Parameter der Größenverteilung des Gemischs unmittelbar aus der Ausgangskennlinie bestimmt werden, ohne dass es hierfür einer Bestimmung einer Näherungskennlinie bedarf.

In einer bevorzugten Ausführungsform handelt es sich bei den Partikeln des Gemischs um Späne, Schnitzel und/oder Fasern. Bei dieser Form von Gemischen, welche beispielsweise das Ausgangsmaterial zur Herstellung einer Werkstoffplatte, insbesondere einer Holzwerkstoffplatte, bildet, kann die Streuung in dem Parameter der Größenverteilung sehr groß sein. Eine große Streuung zumindest eines Parameters in der Größenverteilung eines Gemischs, welcher auch bestimmt werden soll, kann nun gegenüber den aus dem Stand der Technik bekannten Methoden zur Bestimmung des Parameters der Größenverteilung schneller bestimmt werden, ohne dass es hierfür einer zusätzlichen Einrichtung zur separaten Analyse des Gemischs bedarf.

Vorzugsweise besteht das Gemisch zumindest teilweise aus Partikeln aus einem lignozellulosehaltigen Material. Bei lignozellulosehaltigem Material handelt es sich meist um ein Naturprodukt, so dass das entsprechende Ausgangsmaterial für die Herstellung der Partikel bereits eine Varianz in seiner Größe aufweist. Bei der Herstellung eines Gemischs unterliegt ein Parameter der Größenverteilung von Natur aus einer bestimmten Bandbreite, weshalb gerade bei diesem Material die Bestimmung des zumindest einen Parameters der Größenverteilung von Interesse ist.

Eine bevorzugte Ausführungsform zeichnet aus, dass die Erstellung der zumindest einen Aufnahme inline, insbesondere in einer Anlage zur Herstellung von Werkstoffplatten erfolgt und vorzugsweise für die zumindest eine Aufnahme keine Ausschleusung des Gemischs oder eines Teils hiervon erfolgt. Durch eine Aufnahme inline wird die Aufnahme von dem Gemisch während des Prozesses unmittelbar und direkt erstellt. Das Erstellen einer Aufnahme des Gemischs kann bevorzugt dauerhaft oder bedarfsweise erfolgen. Insbesondere kann eine Aufnahme in regelmäßigen zeitlichen Abständen erfolgen, wobei die zeitlichen Abstände vorzugsweise im Bereich von Sekunden bis Minuten liegen. Beispielsweise erfolgt eine Aufnahme des Gemischs jede Sekunde. Alternativ können die Abstände zwischen den Aufnahmen auch länger gewählt werden, beispielsweise 10 Sekunden, 30 Sekunden, 1 Minute, 5 Minuten oder sogar 15 Minuten. Bedarfsweise kann die Erstellung einer Aufnahme erfolgen, wenn beispielsweise eine Änderung des Ausgangsmaterial des Gemischs erfolgt oder defekte Komponenten in der Herstellung des Gemischs repariert wurden.

Alternativ oder vorzugsweise ergänzend erfolgt eine direkte Aufnahme des Gemischs, insbesondere ohne vorherige Vereinzelung, Siebung und/oder Fraktionierung des Gemischs. Die Aufnahme wird direkt an dem Gemisch während des Prozesses zur Herstellung von Werkstoffplatten an einem vorbestimmten Ort innerhalb der Anlage. Bevorzugt wird mehrfach in der Anlage an verschiedenen Orten eine Aufnahme des Gemischs erstellt.

Bevorzugt basiert die zumindest eine Näherungskennlinie auf einer parametrischen Basiskurve, welche den zumindest einen Parameter der Größenverteilung als Variable aufweist oder aus deren Variablen der zumindest eine Parameter der Größenverteilung bestimmt wird. Die Näherungskennlinie kann somit auch durch eine parametrische Basiskurve gebildet werden, wobei die Variablen und die Parametrisierung vorzugsweise von der Art des Gemischs abhängen. Aus der parametrischen Basiskurve ist der zumindest eine Parameter der Größenverteilung des Gemischs bestimmbar, da dieser direkt oder indirekt von den einzelnen Variablen der parametrischen Basiskurve abhängt oder selbst eine Variable der parametrischen Basiskurve bildet.

In einer bevorzugten Ausführungsform wird die zumindest eine Näherungskennlinie durch eine Gewichtung von zumindest zwei Referenzkennlinien ermittelt, wobei die Referenzkennlinien in der Auswerteeinrichtung bereitgestellt werden und jede Referenzkennlinie eine Kennlinie für ein Referenzgemisch aus Partikeln darstellt, wobei der zumindest eine Parameter der Größenverteilung aus der Gewichtung der Referenzkennlinien bestimmt wird. Die Referenzkennlinien bilden somit den Ausgangspunkt zur Ermittlung der Näherungskennlinie. Die Gewichtung kann manuell durch einen Nutzer durchgeführt werden, jedoch insbesondere auch automatisch in der Auswerteeinrichtung erfolgen, wobei hierfür insbesondere auf mathematische Näherungsmethoden zurückgegriffen wird. Bei dem Referenzgemisch handelt es sich um ein Gemisch, für welches Parameter der Partikel und vorzugsweise auch der Zusammensetzung des Gemischs bekannt sind.

Vorzugsweise handelt es sich bei dem Referenzgemisch um ein Gemisch aus Partikel einer Partikelgröße oder einer Partikelgrößenkategorie, bei welchem die Größe der Partikel im Referenzgemisch, insbesondere deren Länge, innerhalb eines Bereichs von bekannten Partikelgröße liegen. Die Breite des Bereichs, welche den Unterschied zwischen der größten und der kleinsten Größe der Partikel im Bereich bestimmt, ist bevorzugt klein zu halten. Vorzugsweise beträgt Breite des Bereichs kleiner 20 mm, bevorzugt kleiner 10 mm, besonders bevorzugt kleiner 5 mm, höchst bevorzugt kleiner oder gleich 1 mm. Insbesondere sind die Bereiche einer Partikelgrößenkategorie und insbesondere deren Breite umso kleiner, je kleiner die Partikel in der Partikelgrößenkategorie sind.

Bevorzugt wird die Referenzkennlinie aus zumindest einer Referenzaufnahme ermittelt, wobei es sich bei der Referenzaufnahme vorzugsweise um eine Aufnahme eines realen Referenzgemischs oder um ein künstlich erzeugtes Bild eines Referenzgemisches handelt. Das reale Referenzgemisch kann beispielsweise durch Siebung eines Gemischs gewonnen werden, wobei das reale Referenzgemisch durch eine gewisse Streubreite der Größe der Partikel meist nur einer Partikelgrößenkategorie zugeordnet werden kann. Die künstlich erzeugte Aufnahme für ein Referenzgemisch hat den Vorteil, dass hier modellierte Partikel einer einzigen Größe, insbesondere einer vorgegebenen Länge, zur Erzeugung eines künstlich erzeugten Referenzgemischs verwendet werden, in welchem die modellierten Partikel bevorzugt chaotisch angeordnet sind.

Alternativ oder vorzugsweise ergänzend wird zumindest eine Referenzkennlinie durch eine mathematische Transformation der Referenzaufnahme, insbesondere durch eine Fourier-Transformation, gebildet, wobei die Referenzkennlinie einen Verlauf einer Intensität, bevorzugt einer normierten Intensität, über der Raumfrequenz darstellt. Somit wird bevorzugt die Referenzkennlinie auf Basis der gleichen mathematischen Transformation wie die Ausgangskennlinie gebildet.

In einer vorteilhaften Ausführungsform werden zumindest fünf Referenzkennlinien, bevorzugt zumindest sieben Referenzkennlinien, besonders bevorzugt zumindest zehn Referenzkennlinien in der Auswerteeinrichtung bereitgestellt oder ermittelt. Eine höhere Anzahl an Referenzkennlinien, welche unterschiedlichen Referenzgemischen zugeordnet sind, ermöglicht eine bessere Nachbildung der Ausgangskennlinie und erhöht somit die Qualität der Bestimmung des zumindest einen Parameters der Größenverteilung des Gemischs. In einer bevorzugten Ausführungsform werden sieben Referenzkennlinien für die folgenden Partikelgrößenkategorien erstellt: 0 mm bis 0,125 mm, 0,125 mm bis 0,315 mm, 0,315 mm bis 0,63 mm, 0,63 mm bis 1,0 mm, 1,0 mm bis 2,0 mm, 2,0 mm bis 4,0 mm, und größer 4,0 mm.

Bevorzugt werden ein Teil der Referenzkennlinien, bevorzugt alle Referenzkennlinien aus nur einer ermittelten Referenzkennlinie abgeleitet. Hierzu ist insbesondere der Einfluss der Größe der Partikel auf die Referenzkennlinie von Bedeutung.

In einer bevorzugten Ausführungsform erfolgt die zumindest eine Aufnahme, wenn das Gemisch gefördert wird, insbesondere wenn das Gemisch auf eine Fördereinrichtung gestreut ist und/oder einen Partikelvorhang ausbildet. Eine Aufnahme des Gemischs kann somit im Herstellungsprozess der Werkstoffplatte erfolgen, in welchem das Gemisch mittels einer Fördereinrichtung transportiert wird oder einen entsprechenden Partikelvorhang ausbildet. Insbesondere wird keine Ausschleusung des Gemischs benötigt um den zumindest einen Parameter der Größenverteilung zu bestimmen. Hierdurch kann das Verfahren auch problemlos in einen bestehenden Prozess bzw. bestehende Anlage zur Herstellung von Werkstoffplatten integriert werden.

Alternativ oder vorzugsweise ergänzend wird das Gemisch für die Aufnahme auf eine Fördereinrichtung gestreut. Ein speziell für die Bestimmung des zumindest einen Parameters der Größenverteilung durchgeführte Streuung des Gemischs zur Erstellung der Aufnahme ermöglicht das Ausbringen des Gemischs in der für die Bestimmung notwendigen oder bevorzugten Art und Weise. Insbesondere können durch eine separate Streuung entsprechend idealisierte und gleichbleibende Bedingungen für die Erstellung der Aufnahme ermöglicht werden, wodurch die Vergleichbarkeit der Aufnahmen untereinander bzw. der daraus abgeleiteten Ausgangskennlinien verbessert wird.

Bevorzugt weist das Gemisch bei der zumindest einen Aufnahme eine im Wesentlichen ebene Oberfläche auf und wird insbesondere vor der zumindest einen Aufnahme geglättet. Durch die ebene Oberfläche wird sichergestellt, dass keine Verzerrung der Partikel durch die Tiefenebene in der Aufnahme erfolgt. Vielmehr sollen die Partikel des Gemischs in nahezu einer Ebene liegen. Hierzu kann auch eine Glättung des Gemischs vor der Aufnahme, beispielsweise durch eine Glättwalze, beitragen.

Alternativ oder vorzugsweise ergänzend wird das Gemisch beleuchtet, bevorzugt homogen beleuchtet, insbesondere durch eine externe Lichtquelle. Durch die Beleuchtung werden die Konturen der einzelnen Partikel des Gemischs besser herausgestellt und sind in der Aufnahme besser erkennbar. Eine homogene Beleuchtung vermindert beispielsweise einen Schattenwurf auf das Gemisch, wodurch die Konturen der Partikel noch deutlicher werden. Die Lichtquelle kann bevorzugt im optischen System selbst integriert sein oder ein von dem optischen System unabhängige Einheit bilden. Die Unabhängigkeit dieser Einheit vom optischen System ermöglicht eine genauere und bessere, insbesondere individuell ausrichtbare Möglichkeit der Beleuchtung des Gemischs.

Bevorzugt erfolgt eine insbesondere homogene Dunkelfeldbeleuchtung des Gemischs. Hierdurch wird die Oberfläche des Gemischs deutlicher dargestellt. Zudem werden unter der Oberfläche tiefer liegende Partikel nicht beleuchtet, wodurch eine genauere Bestimmung des zumindest einen Parameters der Größenverteilung ermöglicht wird.

Bevorzugt kann die Lichtquelle so ausgestaltet sein, dass diese das Gemisch dauerhaft beleuchtet oder in regelmäßigen oder unregelmäßigen zeitlichen Abständen beleuchtet. Das sequenzielle Beleuchten kann insbesondere so ausgestaltet sein, dass lediglich bei Bedarf, insbesondere beim Erstellen einer Aufnahme, eine Beleuchtung stattfindet. Dazu ist diese Einrichtung mit dem optischen System zur Erstellung der Aufnahme synchronisiert.

Die Lichtquelle selbst kann bevorzugt aus mehreren Lichtelementen aufgebaut sein und/oder eine besondere Lichtfarbe aufweisen, mittels welcher beispielsweise die Konturen der einzelnen Partikel des Gemischs deutlicher in der Aufnahme herauskommen bzw. dargestellt werden.

Weiter bevorzugt kann die Lichtquelle unmittelbar oberhalb des Gemischs angeordnet sein. Alternativ oder bevorzugt ergänzend kann eine seitliche Anordnung der Lichtquelle erfolgen, wodurch das Licht der Lichtquelle schräg auf die Oberfläche des Gemischs auftrifft. Insbesondere ist eine homogene Dunkelfeldbeleuchtung vorteilhaft.

In einer bevorzugten Ausführungsform wird die zumindest eine Aufnahme vor Erstellung der zumindest einen Ausgangskennlinie und/oder die Referenzaufnahme vor Erstellung der Referenzkennlinie bearbeitet und/oder nur ein Ausschnitt der zumindest einen Aufnahme und/oder der Referenzaufnahme für die Erstellung der zumindest einen Ausgangskennlinie und/oder der Referenzkennlinie verwendet. Durch eine Bearbeitung der Aufnahme vor Erstellung der entsprechenden Kennlinie können insbesondere Bildfehler in der Aufnahme vorab erkannt und entsprechend behoben werden. Es erfolgt somit eine Art Glättung der Aufnahme. Fehlerbehaftete Aufnahmen können vorab erkannt und auch aussortiert werden, da diese insbesondere zu Fehlermeldungen bei einer Auswertung der fehlerhaften Aufnahme führen würden.

Die Bearbeitung der Aufnahme der Ausgangskennlinie und/oder Referenzkennlinie kann auch dazu dienen, dass besonders relevante Aspekte zur Erstellung der Ausgangskennlinie und/oder Referenzkennlinie, wie beispielsweise die Kontur der Partikel, nochmals deutlicher herausgehoben wird. Es erfolgt somit beispielsweise eine Kantenschärfung der einzelnen Partikel in der Aufnahme, wodurch deren Länge bzw. Größe der Partikel innerhalb des Gemischs besser bestimmbar ist. Die Aufnahme und/oder Referenzaufnahme wird bevorzugt vor der mathematischen Transformation so aufbereitet, dass diese einen quadratischen Bildausschnitt zeigt, dessen Kantenlänge normiert oder bekannt ist.

Bevorzugt erfolgt die Ermittlung der zumindest einen Näherungskennlinie mittels eines Optimierungsalgorithmus. Bei dem Optimierungsalgorithmus kann es sich um eine einfache Methode handeln, welche die Ausbildung der Näherungskennlinie in Abhängigkeit von der Abweichung von der Ausgangskennlinie bestimmt. Hierbei kann die Abweichung über die gesamte Näherungskennlinie oder nur über einen bestimmten Ausschnitt der Näherungskennlinie betrachtet und minimiert wird. Insbesondere handelt es sich hierbei um ein mathematisches Näherungsverfahren.

Alternativ oder vorzugsweise ergänzend kann es sich bei dem Optimierungsalgorithmus auch um einen fortgeschrittenen Algorithmus handeln, welcher auf einer oder einer Kombination der folgenden Methoden basiert: Linear Regression, Polynomal Regression, Functional Regression, K Nearest Neighbors Regression, Random Forest Regression, Support Vector Regression, Neural Networks, Recurrent Neural Networks, Convolutional Neural Networks, Residual Networks, Bayesian Networks, K Nearest Neighbors Classification, Decision Trees, Random Forests, Naive Bayes, Support Vector Machines. Die vorgenannten fortgeschrittenen Methoden basieren im Wesentlichen auf Maschinenlernen und können eine schnellere und bessere Bestimmung der Ausgangskennlinie ermöglichen, wodurch die Ermittlung des zumindest einen Parameters der Größenverteilung des Gemischs schneller und genauer ermöglicht wird.

Bevorzugt umfasst das optische System eine Kamera, welche insbesondere eine Auflösung von mindestens 640 x 640 Pixel aufweist. Besonders bevorzugt hat die Kamera eine Auflösung von 2048 x 2048 Pixel.

Eine bevorzugte Ausführungsform zeichnet aus, dass die zumindest eine Ausgangskennlinie, die zumindest eine Näherungskennlinie und/oder der zumindest eine Parameter der Größenverteilung auf einer Anzeige angezeigt werden. Durch die Darstellung insbesondere der zumindest einen Ausgangskennlinie und der zumindest einen Näherungskennlinie kann auch visuell überprüft werden, ob die Bestimmung der Näherungskennlinie im Wesentlichen zutreffend ist, und ein Bediener kann gegebenenfalls in den Prozess eingreifen. Es können bei der Darstellung auf der Anzeige einerseits Variablen der Näherungskennlinie angezeigt werden, beispielsweise wenn es sich um eine parametrische Basiskurve handelt. Weiter kann jedoch auch unmittelbar die Gewichtung und/oder der zumindest eine Parameter der Größenverteilung mit oder ohne Darstellung der Ausgangskennlinie und/oder der Näherungskennlinie angezeigt werden.

Weiter wird die Aufgabe gelöst durch eine Vorrichtung zur Bestimmung eines Parameters einer Größenverteilung eines Gemischs aus Partikeln im Zuge der Herstellung von Werkstoffplatten, umfassend ein optisches System zur Erfassung zumindest einer Aufnahme des Gemischs und eine Auswerteeinrichtung, wobei das optische System mit der Auswerteeinrichtung wirkverbunden ist, wobei die Auswerteeinrichtung dazu ausgebildet ist aus der zumindest einen Aufnahme des Gemischs zumindest eine Ausgangskennlinie zu erzeugen, welche durch eine mathematische Transformation der zumindest einen Aufnahme, bevorzugt durch eine Fourier-Transformation, gebildet wird und einen Verlauf einer Intensität, bevorzugt einer normierten Intensität, über einer Raumfrequenz darstellt, und wobei die Auswerteeinrichtung dazu ausgebildet ist zumindest eine Näherungskennlinie in der Auswerteeinrichtung durch Approximation derart zu erzeugen, dass die zumindest eine Näherungskennlinie im Wesentlichen mit der zumindest einen Ausgangskennlinie zusammenfällt oder zumindest in Bereichen übereinstimmt, wobei die Näherungskennlinie zumindest auf einer Geometrie der Partikel basiert oder von dieser abhängt, wobei aus der zumindest einen Näherungskennlinie der zumindest eine Parameter der Größenverteilung des Gemischs bestimmbar ist, und wobei die Vorrichtung weiter eine Ausgabeeinheit zumindest zur Ausgabe des zumindest einen Parameters der Größenverteilung umfasst.

Bevorzugt ist das ein optische System der Vorrichtung eine Kamera, insbesondere eine schwarz/weiß Kamera, wobei die Kamera bevorzugt eine Auflösung von zumindest 640 x 640 Pixel aufweist. Besonders bevorzugt hat die Kamera eine Auflösung von 2048 x 2048 Pixel. Durch eine hohe Auflösung werden die Konturen der Partikel auf der Aufnahme entsprechend scharf dargestellt, was sich positiv auf die Ausgangskennlinie und die Auswertung dieser auswirkt.

Vorzugsweise umfasst die Vorrichtung eine Einrichtung zur Glättung des Gemischs vor der zumindest einen Aufnahme und/oder eine externe Lichtquelle, insbesondere zur homogenen Beleuchtung des Gemischs.

Eine weitere Lösung der Aufgabe ist gegeben durch eine Anlage zur Herstellung einer Werkstoffplatte aus einem Gemisch aus Partikeln, umfassend Einrichtungen zur Formung eines Vlieses aus dem Gemisch oder den Partikeln und dessen Verpressung zu Werkstoffplatten sowie bevorzugt zur Beleimung des Gemischs oder der Partikel vor der Formung zu dem Vlies, dadurch gekennzeichnet, dass die Anlage eine Vorrichtung wie vorstehend dargelegt oder eine bevorzugte Ausführungsform hiervon umfasst.

Mittels der Vorrichtung innerhalb der Anlage kann der zumindest eine Parameter der Größenverteilung bestimmt werden, und auf Basis dieses Parameters die weiteren Einrichtungen entsprechend angesteuert und so der Herstellungsprozess verbessert werden. Alternativ oder vorzugsweise ergänzend kann auf Basis des zumindest einen Parameters der Größenverteilung und weiterer Parameter der Anlage die Qualität der Werkstoffplatte bestimmt oder vorhergesagt werden.

Eine bevorzugte Ausführungsform der Anlage zeichnet aus, dass das optische System der Vorrichtung in einem festen Abstand zu einer Oberfläche des Gemischs angeordnet ist. Durch einen festen Abstand zur Oberfläche des Gemischs wird sichergestellt, dass der aufgenommene Ausschnitt stets gleichbleibend ist, wodurch eine Vergleichbarkeit sichergestellt wird.

Alternativ oder vorzugsweise ergänzend ist ein Abstand des optischen Systems zu einer Oberfläche des Gemischs erfassbar und/oder einstellbar, insbesondere zur Bestimmung und/oder in Abhängigkeit einer Aufnahmefläche der Aufnahme. Somit kann auch eine Vergleichbarkeit der Aufnahmen erzielt werden, da die Größe der Aufnahmefläche mit dem Abstand korreliert ist. Insbesondere bei einem Gemisch mit Partikeln kleiner Größe kann eine Aufnahme näher am Gemisch zur genaueren Betrachtung der Partikel des Gemischs erfolgen, so dass eine genauere Bestimmung des zumindest einen Parameters der Größenverteilung ermöglicht wird. Bevorzugt sind entsprechende Mittel zur Einstellung und/oder Erfassung des Abstandes in der Vorrichtung zur Bestimmung eines Parameters einer Größenverteilung eines Gemischs umfasst.

Bevorzugt weist das optische System einen Abstand von 1 cm bis 250 cm, bevorzugt von 5 cm bis 150 cm, besonders bevorzugt von 10 cm bis 100 cm zum Gemisch auf, wobei der Abstand insbesondere von der zu erwartenden Größe der Partikel abhängt, damit diese entsprechend in der Aufnahme klar dargestellt sind.

Vorzugsweise ist das optische System nach einer Einrichtung zur Erzeugung der Partikel aus einem Ausgangsmaterial, vor und/oder nach einer Einrichtung zur Siebung, vor und/oder nach der Einrichtung zur Beleimung, und/oder vor und/oder nach der Einrichtung zur Formung des Vlieses angeordnet. Die Anordnung kann somit im Wesentlichen innerhalb der Anlage an fast jedem Ort erfolgen. Eine Anordnung unmittelbar nach der Erzeugung der Partikel hat den Vorteil, dass Probleme in der Herstellung der Partikel und/oder des Gemischs frühzeitig erkannt werden und entsprechend schnell auf Probleme, beispielsweise stumpfe Messer oder falsch eingestellte Parameter der Maschinen, reagiert werden kann.

Bei einer Siebung werden aus einem Ausgangsgemisch nach Herstellung der Partikel verschiedene Fraktionen gebildet, die insbesondere unterschiedlich weiterverarbeitet und unterschiedlichen Einsatzzwecken zugeführt werden, beispielsweise für unterschiedliche Bereiche zur Herstellung der Werkstoffplatte genutzt werden. Die Bestimmung des zumindest einen Parameters der Größenverteilung nach einer Fraktionierung ermöglicht den Parameter speziell für das jeweilige Gemisch zu bestimmen, wohingegen bei einer Bestimmung vor der Siebung nur eine Aussage über das Gemisch insgesamt möglich ist.

In einer bevorzugten Ausführungsform ist die Auswerteeinrichtung in einer Steuereinrichtung der Anlage integriert. Die ermittelten Daten in der Auswerteeinrichtung können entsprechend in die Steuereinrichtung der Anlage einfließen. Somit kann auf der Bestimmung des zumindest einen Parameters der Größenverteilung beispielsweise im Rahmen der Herstellung einer Werkstoffplatte aus dem Gemisch die Leimmenge entsprechend der Größenverteilung angepasst werden. Aber auch weitere Parameter im Zuge der Herstellung der Werkstoffplatten, wie beispielsweise der Druck und/oder die Temperatur beim Verpressen des Gemischs zu einer Werkstoffplatte, können somit besser eingestellt werden, wodurch die Qualität der Werkstoffplatte erhöht wird. Schließlich ermöglicht die Bestimmung des zumindest einen Parameters der Größenverteilung vorab eine Aussage über die zu erwartende Güte der Werkstoffplatte. Weiter können auch Änderungen in der Herstellung der Partikel eingeleitet werden, wenn die Größenverteilung von einer Vorgabe abweicht. Fehler in der Produktion der Partikel können somit schnell erkannt und entsprechend auch schnell behoben werden.

Bevorzugt sind in der Anlage Einrichtungen zur Zerkleinerung, Sortierung, Bereitstellung eines Bindemittels, Lagerung, Klimatisierung, zur Wägung, zur Überwachung und/oder Prüfung der Partikel und/oder eines Ausgangsmaterials der Partikel, zur Vorpressung, zur Einstellung der Feuchte, zur Einstellung der Temperatur, zur Einstellung der Breite und/oder Höhe des Vlieses, zur Messung von Parametern eines Edukts und von Produktparametern und/oder Qualitätsparametern der Werkstoffplatte, zur Aufteilung und/oder zur Abstapelung und/oder zur Temperierung der Werkstoffplatte vorgesehen.

Schließlich wird die Aufgabe auch gelöst durch ein Computerprogrammprodukt mit einem computerlesbaren Speichermedium, auf dem Befehle eingebettet sind, die, wenn sie von einer Auswerteeinrichtung ausgeführt werden, bewirken, dass die Auswerteeinrichtung dazu eingerichtet ist, ein Verfahren zur Bestimmung zumindest eines Parameters einer Größenverteilung eines Gemischs aus Partikeln im Zuge der Herstellung von Werkstoffplatten wie vorstehend dargelegt oder eine bevorzugt Ausführungsform hiervon auszuführen, insbesondere mit einer Vorrichtung wie vorstehend dargelegt oder eine bevorzugt Ausführungsform hiervon, bevorzugt in einer Anlage wie vorstehend dargelegt oder eine bevorzugt Ausführungsform hiervon.

Weitere vorteilhafte Ausgestaltungsformen des Verfahrens zur Herstellung von Werkstoffplatten wie auch der Produktionsanlage zur Herstellung von Werkstoffplatten sind in den nachfolgenden Figuren dargelegt.

Es zeigen:
- Figur 1: eine prinzipielle Darstellung einer Produktionsanlage zur Herstellung von Werkstoffplatten; und
- Figur 2: ein Ablaufdiagramm zur Bestimmung zumindest eines Parameters einer Größenverteilung eines Gemischs.

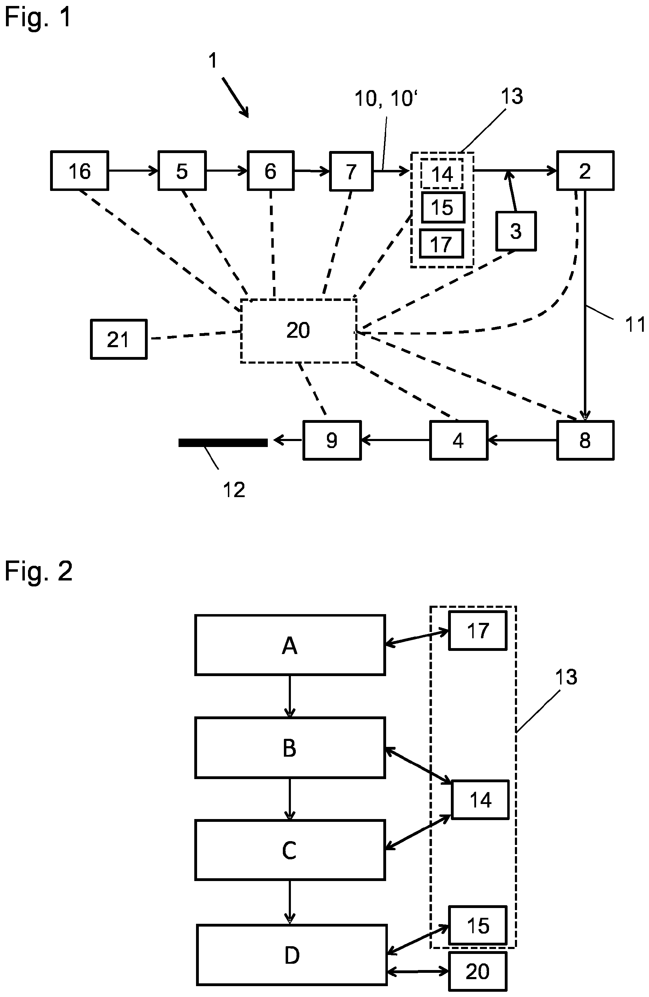

In Figur 1 ist lediglich schematisch eine erfindungsgemäße Anlage 1 zur Herstellung von Werkstoffplatten 12 dargestellt. Die Anlage 1 umfasst hierbei mehrere Einrichtungen 2, 3, 4, 5, 6, 7, 8, 9, in welchem Ausgangsmaterial 16 letztendlich zu einer Werkstoffplatte 12 verarbeitet wird. Bei dem Ausgangsmaterial 16 handelt es sich vorliegend um Holz, welches zu Partikel, insbesondere zu Holzspänen, verarbeitet wird und als Grundlage der Herstellung einer Spanplatte als Werkstoffplatte 12 dient. Die Herstellung der Partikel erfolgt beispielsweise in einem Messerringzerspaner. Neben Holz kann das Ausgangsmaterial 16 auch aus anderen lignozellulosehaltigen Materialien, Recyclingmaterialien, beispielsweise Recyclingholz oder recyceltem Kunststoff, oder Kunststoffe gebildet sein. Daneben kann das Ausgangsmaterial 16 auch aus einer Mischung verschiedener Materialien, beispielsweise Frischholz und Recyclingholz und/oder Kunststoff, bestehen.

In der schematisch dargestellten Anlage 1 wird das Ausgangsmaterial 16 zunächst in einer Einrichtung 5 zum Zerkleinern des Ausgangsmaterials 16 zu Partikeln verarbeitet. Beispielsweise kann es sich bei der Vorrichtung 5 zum Zerkleinern um eine Schneideinrichtung, einen Hacker oder einen Messerringzerspaner handeln. Das Ausgangsmaterial 16 wird in den Einrichtungen 5 zum Zerkleinern so verarbeitet, dass sich ein Gemisch 10 aus Partikeln bildet. Das Gemisch 10 weist hinsichtlich der Größe der Partikel, vorliegend insbesondere hinsichtlich der Länge der einzelnen Partikel, innerhalb des Gemischs 10 eine Größenverteilung auf. Es können hierbei nicht nur ein Gemisch 10, sondern auch mehrere, unterschiedliche Gemische 10, 10' gebildet werden, wenn die Werkstoffplatte 12 aus mehreren Schichten unterschiedlicher Ausprägung gebildet werden soll. Insbesondere bei der Herstellung einer Spanplatte kann dies beispielsweise zu einer Ausbildung eines Gemischs 10 für die Mittelschicht und eines Gemischs für die Deckschichten führen, die durch Verwendung unterschiedlicher Maschinen und/oder Verfahrensweisen in den Einrichtungen 5 zur Zerkleinerung hergestellt werden. Alternativ können unterschiedliche Gemische 10, 10' auch in einem späteren Zeitpunkt in der Anlage 1 erzeugt werden, beispielsweise durch eine Einrichtung 7 zur Sortierung der Partikel.

Nach der Zerkleinerung werden die Partikel des Gemischs 10 anschließend einer Einrichtung 6 zur Trocknung zugeführt, in welcher dieses für den weiteren Prozess auf eine vorgegebene Restfeuchte getrocknet wird.

Die Partikel durchlaufen anschließend eine Einrichtung 7 zur Sortierung, in welcher die Partikel in mehrere Gemische 10, 10' aufgeteilt werden. Eine Fraktionierung der Partikel erfolgt vorliegend auf Basis der Größe der Partikel, wobei insbesondere Partikel mit einer kleineren Partikelgröße von zerkleinertem Ausgangsmaterial 16 von Partikeln mit einer größeren Partikelgröße getrennt werden und jeweils ein Gemisch 10, 10' bilden. Die weitere Verarbeitung der Gemische 10, 10' erfolgt in getrennten Verarbeitungslinien oder wird getrennten Zwischenspeichern zugeführt. Eine Bildung von Gemischen 10, 10' in einer Einrichtung 7 zur Sortierung zielt auf die Herstellung einer hochwertigen Werkstoffplatte 12 in Form einer Spanplatte ab, bei welcher beispielsweise das Gemisch 10, 10' mit einer geringeren Partikelgröße an den Außenflächen der Flächenseiten der Werkstoffplatte 12 angeordnet wird und das Gemisch 10, 10' mit den gröberen Partikeln eine Mittelschicht der Werkstoffplatte 12 bildet.

Die Sortierung bzw. Siebung der Partikel dient hierbei lediglich der Bildung mehrerer Gemische 10, 10' für die entsprechenden Schichten der Werkstoffplatte 12. Damit einher geht lediglich eine Festlegung dahingehend, welche maximalen Ausmaße, insbesondere welche maximale Länge, die Partikel in den Gemischen 10, 10' aufweisen sollen. Es erfolgt bei der Sortierung bzw. Siebung jedoch keine Analyse dahingehend, wie die Größenverteilung innerhalb des Gemischs 10, 10' ausgebildet ist.

Nach der Einrichtung 6 zur Trocknung werden die Gemische 10, 10' in einer Einrichtung 3 zur Beleimung mit einem Bindemittel versetzt. Die Verwendung eines Bindemittels ist dabei abhängig von dem jeweiligen Gemisch 10, 10', insbesondere von der Größenverteilung innerhalb des Gemischs 10, 10' als ein Parameter der Größenverteilung. Aber auch die mittlere Spangröße der Partikel des Gemischs 10, 10' kann ein Parameter der Größenverteilung bilden und als Grundlage für die zu verwendete Leimmenge dienen.

Zur Bestimmung des Parameters der Größenverteilung ist vor der Einrichtung 3 zur Beleimung eine Vorrichtung 13 zur Bestimmung eines Parameters einer Größenverteilung des Gemischs 10, 10' aus Partikeln angeordnet. Diese Vorrichtung 13 umfasst ein optisches System 17 in Form einer Kamera zur Erfassung zumindest einer Aufnahme des Gemischs. Die Aufnahme erfolgt während des Produktionsprozesses und in einem Zustand, wenn das Gemisch 10, 10' auf einer Fördereinrichtung aufliegt. Es ist somit keine Ausschleusung von Material zur Erstellung der Aufnahme notwendig. In der Aufnahme ist hierbei die Oberfläche des auf der Fördereinrichtung aufliegenden Gemischs 10, 10' dargestellt. Die Vorrichtung 13 umfasst weiter eine Auswerteeinrichtung 14, mit welcher das optische System 17 wirkverbunden ist. Die Auswerteeinrichtung 14 ist dazu ausgebildet aus der zumindest einen Aufnahme des Gemischs 10, 10' zumindest eine Ausgangskennlinie zu erzeugen, welche durch eine Fourier-Transformation der zumindest einen Aufnahme gebildet wird. Für die Fourier-Transformation wird die Aufnahme so bearbeitet, dass diese einen quadratischen Bildausschnitt zeigt. Weiter erfolgt eine Bearbeitung dahingehend, dass die Kanten der Partikel in der Aufnahme geschärft werden. Durch die Fourier-Transformation wird aus der Aufnahme die Ausgangskennlinie erzeugt, welche einen Verlauf einer normierten Intensität über einer Raumfrequenz darstellt.

Die Auswerteeinrichtung 14 ist dazu ausgebildet eine Näherungskennlinie durch Approximation derart zu erzeugen, dass die zumindest eine Näherungskennlinie im Wesentlichen mit der zumindest einen Ausgangskennlinie zusammenfällt. Die Näherungskennlinie wird hierbei durch Gewichtung von sieben Referenzkennlinien gebildet, welche in der Auswerteeinrichtung 14 hinterlegt sind. Bei den Referenzkennlinien handelt es sich um Kennlinien von Gemischen aus Partikeln einer Partikelgrößenkategorie, welche ebenfalls durch Fourier-Transformation aus einer Referenzaufnahme erstellt wurden. Die Referenzgemische für die Partikelgrößenkategorien wurden hierbei durch Siebung eines Ausgangsmaterials entsprechend der Partikelgröße der jeweiligen Kategorie erstellt. Die sieben Referenzkennlinien stellen hierbei die Kennlinien für die folgenden Partikelgrößenkategorien dar: 0 mm bis 0,125 mm, 0,125 mm bis 0,315 mm, 0,315 mm bis 0,63 mm, 0,63 mm bis 1,0 mm, 1,0 mm bis 2,0 mm, 2,0 mm bis 4,0 mm, und größer 4,0 mm.

Aus der Gewichtung der einzelnen Referenzkennlinien bzw. aus der ermittelten Näherungskennlinie ist schließlich der eine Parameter der Größenverteilung des Gemischs 10, 10', vorliegend die Größenverteilung selbst und/oder die mittlere Spangröße, bestimmbar. Zur weiteren Verarbeitung und Visulisierung der ermittelten Werte umfasst die Vorrichtung 13 weiter eine Ausgabeeinheit 15, welche den ermittelten Parameter an die Steuereinrichtung 20 der Anlage 1 übermittelt. Die Auswerteeinrichtung 14 und Ausgabeeinheit 15 können auch Teil der Steuereinrichtung 20 und in dieser integriert sein. Zudem können der oder die ermittelten Parameter auch auf einer Anzeige 21 dargestellt werden.

Nach der Beleimung des Gemischs 10, 10' werden diese einer Einrichtung 2 zum Streuen zugeführt. In dieser Einrichtung 2 wird das Gemisch 10, 10' auf einem Formband zu einem Vlies 11 oder einer Matte gestreut. Das Gemisch 10, 10' mit Partikeln kleinerer Partikelgröße wird hierbei als Deckschicht verwendet und das Gemisch 10, 10' mit Partikeln einer größeren Partikelgröße als Mittelschicht, so dass das Vlies 11 einen geschichteten Aufbau Deckschicht - Mittelschicht - Deckschicht aufweist. Das so gestreute, dreischichtige Vlies 11 durchläuft anschließend, wie in der Figur 1 dargestellt, eine Einrichtung 8 zur Vorpressung, in welcher das Vlies 11 vorverpresst wird. In der Einrichtung 8 wird das Vlies 11 somit einerseits verdichtet und andererseits entlüftet, wodurch eine verbesserte Verpressung des Vlieses 11 zu der Werkstoffplatte 12 in der Einrichtung 4 zum Pressen ermöglicht wird.

In der Einrichtung 4 zum Verpressen, welche vorliegend als kontinuierlich arbeitende Presse ausgebildet ist, wird das Vlies 11 Druck und Wärme ausgesetzt, wodurch das Bindemittel in dem geschichteten Vlies 11 abbindet und sich am Ende der Einrichtung 4 zum Verpressen die Werkstoffplatte 12 bzw. ein kontinuierlicher Werkstoffplattenstrang bildet. Vor der Einrichtung 4 zum Verpressen kann gegebenenfalls auch eine weitere Einrichtung zur Vorwärmung des Vlieses 11, beispielsweise mittels Dampf oder Mikrowellenstrahlung, angeordnet sein. Der aus der Einrichtung 4 austretende kontinuierliche Werkstoffplattenstrang wird anschließend in einer Einrichtung 9 zum Trennen mittels Diagonalsägen aufgeteilt, wodurch Werkstoffplatten 12 gewünschter Länge gebildet werden. Die so gebildeten Werkstoffplatten 12 werden anschließend gekühlt, abgestapelt und einem Lager oder einer unmittelbaren Weiterverarbeitung zugeführt.

Die einzelnen Einrichtungen 2, 3, 4, 5, 6, 7, 8 ,9 und die Vorrichtung13 der Anlage 1 sind über eine zentrale Steuereinrichtung 20 miteinander wirkverbunden. Die Steuereinrichtung 20 umfasst hierbei eine speicherprogrammierbare Steuerung, mittels welcher die Anlage 1 sowie die Einrichtungen 2, 3, 4, 5, 6, 7, 8 ,9 und die Vorrichtung 13 gesteuert oder geregelt werden. Über die Wirkverbindung der Steuereinrichtung 20 mit den einzelnen Einrichtungen 2, 3, 4, 5, 6, 7, 8 ,9 und der Vorrichtung 13 der Anlage 1 werden in der Steuereinrichtung 20 mittels Sensoren Parameter erfasst sowie geänderte Parameter, beispielsweise in Abhängigkeit der ermittelten Größenverteilung des Gemischs 10, 10', an die Anlage 1 bzw. die einzelnen Einrichtungen 2, 3, 4, 5, 6, 7, 8 ,9 übergeben.

In Figur 2 sind nochmals deutlich die einzelnen Schritte zur Bestimmung zumindest eines Parameters einer Größenverteilung des Gemischs 10 im Zuge der Herstellung von Werkstoffplatten 12 dargestellt.

In Schritt A wird zunächst eine Aufnahme des Gemischs 10 mit einem optischen System 17 in Form einer Kamera erstellt. Die Aufnahme erfolgt hierbei bei einer homogenen Dunkelfeldbeleuchtung des Gemischs 10, wodurch die Oberfläche des Gemischs 10 besonders deutlich in der Aufnahme dargestellt wird. Diese erstellte Aufnahme wird in einem Schritt B an eine Auswerteeinrichtung 14 übermittelt.

In der Auswerteeinrichtung 14 wird die Aufnahme zunächst bearbeitet, insbesondere derart, dass ein quadratischer Bildausschnitt ausgewählt und die in der Aufnahme dargestellten Kanten der Partikel geschärft werden. Aus dieser bearbeiteten Aufnahme wird schließlich eine Ausgangskennlinie erzeugt. Alternativ können auch mehrere Aufnahmen, die in kurzen Abständen hintereinander erfolgt sind oder aus Ausschnitten einer Aufnahme erzeugt wurden, zur Erzeugung einer oder mehrerer Ausgangskennlinien dienen. Weiter alternativ können aus jeweils mehreren Aufnahmen oder aus mehreren Ausschnitten einer Aufnahme jeweils Ausgangskennlinien erzeugt werden, welche separat betrachtet oder zu einer gemittelten Ausgangskennlinie zusammengeführt werden können. Die Bildung der Kennlinie erfolgt hierbei durch Fourier-Transformation der Aufnahme und stellt jeweils einen Verlauf einer Intensität über einer Raumfrequenz dar. Die Transformation ermöglicht insbesondere auch die Bestimmung von kleinen Partikelgrößen oder Partikelgrößenkategorieninnerhalb des Gemischs 10, insbesondere bei einer Partikelgröße kleiner 0,5mm. Bei kleinen Partikelgrößen erlauben Verfahren aus Basis einer unmittelbaren Auswertung der Aufnahme keine aussagekräftige Ermittlung des Anteils an dem Gemisch.

In einem weiteren Schritt C wird eine Näherungskennlinie in der Auswerteeinrichtung 14 durch Approximation derart ermittelt, dass die Näherungskennlinie im Wesentlichen mit der Ausgangskennlinie zusammenfällt oder zumindest in einem vorgegebenen Bereich im Wesentlichen übereinstimmt. Die Näherungskennlinie basiert hierbei auf einer Geometrie der Partikel, vorliegend der Partikelgröße. Die Näherungskennlinie wird weiter durch Gewichtung von sieben Referenzkennlinien gebildet, wie vorstehend dargelegt. Alternativ kann die Näherungskennlinie auch auf einer parametrischen Basiskurve basieren, deren Formel in der Auswerteeinrichtung hinterlegt ist. Die einzelnen Variablen der parametrischen Basiskurve können entweder manuell durch einen Bediener der Anlage oder durch einen Optimierungsalgorithmus automatisch bestimmt werden, wobei aus der oder den Variablen der Basiskurve der Parameter der Größenverteilung abgeleitet wird oder sogar die Variable der parametrischen Basiskurve selbst den Parameter der Größenverteilung darstellt.

Schließlich wird in einem Schritt D ein Parameter der Größenverteilung des Gemischs 10, vorliegend der Größenverteilung selbst oder die mittlere Spangröße, aus der zumindest einen Näherungskennlinie und/oder Ausgangskennlinie bestimmt. Dieser kann dann an die Steuereinrichtung 20 der Anlage 1 übergeben werden, wodurch die weiteren Einrichtungen 2, 3, 4, 5, 6, 7, 8, 9 der Anlage 1 in Abhängigkeit der Größenverteilung entsprechend eingestellt werden können, so dass die Werkstoffplatte 12 optimale Eigenschaften aufweist. Weiter kann auch die Vorrichtung 13 auf Basis des ermittelten Parameters angesteuert werden, indem diese öfter eine Aufnahme veranlasst, da der Parameter beispielsweise in einem kritischen Bereich liegt oder in Relation zu vorhergehenden Messungen eine breite Varianz aufweist.

### Bezugszeichenliste

- 1: Anlage
- 2: Einrichtung zum Streuen
- 3: Einrichtung zum Beleimen
- 4: Einrichtung zum Pressen
- 5: Einrichtung zum Zerkleinern
- 6: Einrichtung zum Trocknen
- 7: Einrichtung zum Sortieren
- 8: Einrichtung zum Vorpressen
- 9: Einrichtung zum Trennen
- 10, 10': Gemisch
- 11: Vlies
- 12: Werkstoffplatte
- 13: Vorrichtung
- 14: Auswerteeinrichtung
- 15: Ausgabeeinheit
- 16: Ausgangsmaterial
- 17: optisches System
- 20: Steuereinrichtung
- 21: Anzeige

## Patentansprüche

1. Verfahren zur Bestimmung zumindest eines Parameters einer Größenverteilung eines Gemischs (10, 10') aus Partikeln im Zuge der Herstellung von Werkstoffplatten (12), umfassend die Schritte:
A. Erstellen zumindest einer Aufnahme des Gemischs (10, 10') mit einem optischen System (17);
B. Übermitteln der zumindest einen Aufnahme an eine Auswerteeinrichtung (14) und Erzeugen zumindest einer Ausgangskennlinie aus der zumindest einen Aufnahme, wobei die zumindest eine Ausgangskennlinie durch eine mathematische Transformation der zumindest einen Aufnahme, bevorzugt durch eine Fourier-Transformation, gebildet wird und einen Verlauf einer Intensität, bevorzugt einer normierten Intensität, über einer Raumfrequenz darstellt,
C. Ermittlung zumindest einer Näherungskennlinie in der Auswerteeinrichtung (14) durch Approximation derart, dass die zumindest eine Näherungskennlinie im Wesentlichen mit der zumindest einen Ausgangskennlinie zusammenfällt oder zumindest in Bereichen im Wesentlichen übereinstimmt, wobei die zumindest eine Näherungskennlinie zumindest auf einer Geometrie der Partikel basiert oder von dieser abhängt, und
D. Bestimmung des zumindest einen Parameters der Größenverteilung des Gemischs (10, 10') aus der zumindest einen Näherungskennlinie und/oder Ausgangskennlinie.

2. Verfahren nach Anspruch 1, **dadurch gekennzeichnet, dass** es sich bei den Partikeln des Gemischs (10, 10') um Späne, Schnitzel und/oder Fasern handelt und/oder dass das Gemisch (10, 10') zumindest teilweise aus Partikeln aus einem lignozellulosehaltigen Material besteht.

3. Verfahren nach einem der vorhergehenden Ansprüche, **dadurch gekennzeichnet, dass** die Erstellung der zumindest einen Aufnahme inline, insbesondere in einer Anlage (1) zur Herstellung von Werkstoffplatten (12) erfolgt und vorzugsweise für die zumindest eine Aufnahme keine Ausschleusung des Gemischs (10, 10') oder eines Teils hiervon erfolgt und/oder dass eine direkte Aufnahme des Gemischs (10, 10'), insbesondere ohne vorherige Vereinzelung, Siebung und/oder Fraktionierung des Gemischs (10, 10'), erfolgt.

4. Verfahren nach einem der vorhergehenden Ansprüche, **dadurch gekennzeichnet, dass** die zumindest eine Näherungskennlinie auf einer parametrischen Basiskurve basiert, welche den zumindest einen Parameter der Größenverteilung als Variable aufweist oder aus deren Variablen der zumindest eine Parameter der Größenverteilung bestimmt wird.

5. Verfahren nach einem der vorhergehenden Ansprüche, **dadurch gekennzeichnet, dass** die zumindest eine Näherungskennlinie durch eine Gewichtung von zumindest zwei Referenzkennlinien ermittelt wird, wobei die Referenzkennlinien in der Auswerteeinrichtung bereitgestellt werden und jede Referenzkennlinie eine Kennlinie für ein Referenzgemisch aus Partikeln darstellt, wobei der zumindest eine Parameter der Größenverteilung aus der Gewichtung der Referenzkennlinien bestimmt wird.

6. Verfahren nach Anspruch 5, **dadurch gekennzeichnet, dass** die Referenzkennlinie aus zumindest einer Referenzaufnahme ermittelt wird, wobei es sich bevorzugt bei der Referenzaufnahme um eine Aufnahme eines realen Referenzgemischs oder um ein künstlich erzeugtes Bild eines Referenzgemisches handelt, wobei insbesondere das Referenzgemisch als ein Gemisch mit Partikeln nur einer Partikelgröße oder einer Partikelgrößenkategorie ausgebildet ist und/oder
**dass** zumindest eine Referenzkennlinie durch eine mathematische Transformation der Referenzaufnahme, insbesondere durch eine Fourier-Transformation, gebildet wird, wobei die Referenzkennlinie einen Verlauf einer Intensität, bevorzugt einer normierten Intensität, über der Raumfrequenz darstellt.

7. Verfahren nach einem der vorhergehenden Ansprüche 5 oder 6, **dadurch gekennzeichnet, dass** zumindest fünf Referenzkennlinien, bevorzugt zumindest sieben Referenzkennlinien, besonders bevorzugt zumindest zehn Referenzkennlinien in der Auswerteeinrichtung bereitgestellt oder ermittelt werden.

8. Verfahren nach einem der vorhergehenden Ansprüche, **dadurch gekennzeichnet, dass** die zumindest eine Aufnahme erfolgt, wenn das Gemisch (10, 10') gefördert wird, insbesondere wenn das Gemisch (10, 10') auf eine Fördereinrichtung gestreut ist und/oder einen Partikelvorhang ausbildet, und/oder dass das Gemisch (10, 10') für die Aufnahme auf eine Fördereinrichtung gestreut wird und/oder
**dass** das Gemisch (10, 10') bei der zumindest einen Aufnahme eine im Wesentlichen ebene Oberfläche aufweist und insbesondere vor der zumindest einen Aufnahme geglättet wird und/oder dass das Gemisch (10, 10') beleuchtet, bevorzugt homogen beleuchtet wird, insbesondere durch eine externe Lichtquelle.

9. Verfahren nach einem der vorhergehenden Ansprüche, **dadurch gekennzeichnet, dass** die zumindest eine Aufnahme vor Erstellung der zumindest einen Ausgangskennlinie und/oder die Referenzaufnahme vor Erstellung der Referenzkennlinie bearbeitet wird und/oder dass nur ein Ausschnitt der zumindest einen Aufnahme und/oder der Referenzaufnahme für die Erstellung der zumindest einen Ausgangskennlinie und/oder der Referenzkennlinie verwendet wird.

10. Verfahren nach einem der vorhergehenden Ansprüche, **dadurch gekennzeichnet, dass** die Ermittlung der zumindest einen Näherungskennlinie mittels eines Optimierungsalgorithmus erfolgt, und/oder
**dass** das optische System (17) eine Kamera umfasst, welche insbesondere eine Auflösung von mindestens 640 x 640 Pixel aufweist und/oder **dass** die zumindest eine Ausgangskennlinie, die zumindest eine Näherungskennlinie und/oder der zumindest eine Parameter der Größenverteilung auf einer Anzeige (21) einer Ausgabeeinheit (15) angezeigt werden.

11. Vorrichtung (13) zur Bestimmung eines Parameters einer Größenverteilung eines Gemischs (10) aus Partikeln im Zuge der Herstellung von Werkstoffplatten (12), umfassend ein optisches System (17) zur Erfassung zumindest einer Aufnahme des Gemischs (10, 10') und eine Auswerteeinrichtung (14), wobei das optische System (17) mit der Auswerteeinrichtung (14) wirkverbunden ist, wobei die Auswerteeinrichtung (14) dazu ausgebildet ist aus der zumindest einen Aufnahme des Gemischs (10, 10') zumindest eine Ausgangskennlinie zu erzeugen, welche durch eine mathematische Transformation der zumindest einen Aufnahme, insbesondere durch eine Fourier-Transformation, gebildet wird und einen Verlauf einer Intensität, bevorzugt einer normierten Intensität, über einer Raumfrequenz darstellt, und wobei die Auswerteeinrichtung (14) dazu ausgebildet ist zumindest eine Näherungskennlinie in der Auswerteeinrichtung (14) durch Approximation derart zu erzeugen, dass die zumindest eine Näherungskennlinie im Wesentlichen mit der zumindest einen Ausgangskennlinie zusammenfällt oder zumindest in Bereichen übereinstimmt, wobei die Näherungskennlinie zumindest auf einer Geometrie der Partikel basiert oder von dieser abhängt, wobei aus der zumindest einen Näherungskennlinie der eine Parameter der Größenverteilung des Gemischs bestimmbar ist, und wobei die Vorrichtung (13) weiter eine Ausgabeeinheit (15) zumindest zur Ausgabe des zumindest einen Parameters der Größenverteilung umfasst.

12. Vorrichtung (13) nach Anspruch 11, **dadurch gekennzeichnet, dass** das optische System (17) eine Kamera ist, insbesondere eine schwarz/weiß Kamera, wobei die Kamera bevorzugt eine Auflösung von zumindest 640 x 640 Pixel aufweist und/oder
**dass** die Vorrichtung (13) eine Einrichtung zur Glättung des Gemischs (10, 10') vor der zumindest einen Aufnahme und/oder eine externe Lichtquelle, insbesondere zur homogenen Beleuchtung des Gemischs (10, 10'), umfasst.

13. Anlage (1) zur Herstellung einer Werkstoffplatte (12) aus einem Gemisch (10) aus Partikeln, umfassend Einrichtungen (2, 3, 4, 5, 6,7, 8, 9) zur Formung eines Vlieses (11) aus dem Gemisch (10, 10') oder den Partikeln und dessen Verpressung zu Werkstoffplatten (12) sowie bevorzugt zur Beleimung des Gemischs (10, 10') oder der Partikel vor der Formung zu dem Vlies (11), **dadurch gekennzeichnet, dass** die Anlage (1) eine Vorrichtung (13) nach einem der Ansprüche 11 oder 12 umfasst.

14. Anlage (1) nach Anspruch 13, **dadurch gekennzeichnet, dass** das optische System (17) der Vorrichtung (13) in einem festen Abstand zu einer Oberfläche des Gemischs (10, 10') angeordnet ist und/oder ein Abstand des optischen Systems (17) zu einer Oberfläche des Gemischs (10, 10') erfassbar und/oder einstellbar ist, insbesondere zur Bestimmung und/oder in Abhängigkeit einer Aufnahmefläche der Aufnahme und/oder **dass** das optische System (17) nach einer Einrichtung (5) zur Erzeugung der Partikel aus einem Ausgangsmaterial (16), vor und/oder nach einer Einrichtung (7) zur Siebung, vor und/oder nach der Einrichtung (3) zur Beleimung, und/oder vor und/oder nach der Einrichtung (2) zur Formung des Vlieses angeordnet ist.

15. Anlage (1) nach einem der Ansprüche 13 oder 14, **dadurch gekennzeichnet, dass** die Auswerteeinrichtung (14) in einer Steuereinrichtung (20) der Anlage (1) integriert ist und/oder
**dass** in der Anlage (1) Einrichtungen (2, 3, 4, 5, 6,7, 8, 9) zur Zerkleinerung, Sortierung, Bereitstellung eines Bindemittels, Lagerung, Klimatisierung, zur Wägung, zur Überwachung und/oder Prüfung der Partikel und/oder eines Ausgangsmaterials (16) der Partikel, zur Vorpressung, zur Einstellung der Feuchte, zur Einstellung der Temperatur, zur Einstellung der Breite und/oder Höhe des Vlieses, zur Messung von Parametern eines Edukts und von Produktparametern und/oder Qualitätsparametern der Werkstoffplatte, zur Aufteilung und/oder zur Abstapelung und/oder zur Temperierung der Werkstoffplatte (12) vorgesehen sind.

16. Computerprogrammprodukt mit einem computerlesbaren Speichermedium, auf dem Befehle eingebettet sind, die, wenn sie von einer Auswerteeinrichtung ausgeführt werden, bewirken, dass die Auswerteeinrichtung (14) dazu eingerichtet ist, ein Verfahren zur Bestimmung zumindest eines Parameters einer Größenverteilung eines Gemischs (10, 10') aus Partikeln im Zuge der Herstellung von Werkstoffplatten (12) nach einem der Ansprüche 1 bis 14 auszuführen, insbesondere mit einer Vorrichtung (13) nach einem der Ansprüche 11 oder 12, bevorzugt in einer Anlage (1) nach einem der Ansprüche 13 bis 15.

## Claims

1. Method for determining at least one parameter of a size distribution of a mixture (10, 10') of particles during the production of material boards (12), comprising the steps of:
A. producing at least one recording of the mixture (10, 10') with an optical system (17);
B. transmitting the at least one recording to an evaluation apparatus (14) and producing at least one output characteristic line from the at least one recording, wherein the at least one output characteristic line is formed by a mathematical transformation of the at least one recording, preferably by means of a Fourier transformation, and represents a path of an intensity, preferably a standardized intensity, over a spatial frequency,
C. establishing at least one approximation characteristic line in the evaluation apparatus (14) by means of approximation in such a manner that the at least one approximation characteristic line substantially coincides with the at least one output characteristic line or at least in areas substantially corresponds, wherein the at least one approximation characteristic line is based at least on a geometry of the particles or is dependent thereon, and
D. determining the at least one parameter of the size distribution of the mixture (10, 10') from the at least one approximation characteristic line and/or output characteristic line.

2. Method according to claim 1, **characterized in that** the particles of the mixture (10, 10') are chips, shreds and/or fibers, and/or **in that** the mixture (10, 10') at least partially consists of particles of a lignocellulose-containing material.

3. Method according to any one of the preceding claims, **characterized in that** the production of the at least one recording is carried out inline, in particular in an installation (1) for producing material boards (12), and preferably for the at least one recording no discharge of the mixture (10, 10') or a portion thereof is carried out and/or **in that** a direct recording of the mixture (10, 10'), in particular without previous separation, sieving and/or fractionation of the mixture (10, 10'), is carried out.

4. Method according to any one of the preceding claims, **characterized in that** the at least one approximation characteristic line is based on a parametric base line which has the at least one parameter of the size distribution as a variable or from whose variables the at least one parameter of the size distribution is determined.

5. Method according to any one of the preceding claims, **characterized in that** the at least one approximation characteristic line is established by means of a weighting of at least two reference characteristic lines, wherein the reference characteristic lines are provided in the evaluation apparatus and each reference characteristic line represents a characteristic line for a reference mixture of particles, wherein the at least one parameter of the size distribution is determined from the weighting of the reference characteristic lines.

6. Method according to claim 5, **characterized in that** the reference characteristic line is established from at least one reference recording, wherein the reference recording is preferably a recording of a real reference mixture or an artificially produced image of a reference mixture, wherein in particular the reference mixture is formed as a mixture with particles of only one particle size or a particle size category, and/or
**in that** at least one reference characteristic line is formed by a mathematical transformation of the reference recording, in particular by means of a Fourier transformation, wherein the reference characteristic line represents a path of an intensity, preferably a standardized intensity, over the spatial frequency.

7. Method according to any one of the preceding claims 5 or 6, **characterized in that** at least five reference characteristic lines, preferably at least seven reference characteristic lines, in a most preferred manner at least ten reference characteristic lines are provided or established in the evaluation apparatus.

8. Method according to any one of the preceding claims, **characterized in that** the at least one recording is carried out when the mixture (10, 10') is conveyed, in particular when the mixture (10, 10') is scattered on a conveyor apparatus and/or forms a particle curtain, and/or
**in that** the mixture (10, 10') is scattered for the recording onto a conveyor apparatus and/or **in that** the mixture (10, 10') during the at least one recording has a substantially planar surface and in particular is smoothed prior to the at least one recording and/or **in that** the mixture (10, 10') is illuminated, preferably illuminated in a homogeneous manner, in particular by means of an external light source.

9. Method according to any one of the preceding claims, **characterized in that** the at least one recording is processed before the at least one output characteristic line is produced and/or the reference recording is processed before the reference characteristic line is produced and/or **in that** only a portion of the at least one recording and/or the reference recording is used to produce the at least one output characteristic line and/or the reference characteristic line.

10. Method according to any one of the preceding claims, **characterized in that** the establishment of the at least one approximation characteristic line is carried out by means of an optimization algorithm, and/or
**in that** the optical system (17) comprises a camera which in particular has a resolution of at least 640 x 640 pixel and/or
**in that** the at least one output characteristic line, the at least one approximation characteristic line and/or the at least one parameter of the size distribution are displayed on a display (21) of an output unit (15).

11. Device (13) for determining a parameter of a size distribution of a mixture (10) of particles during the production of material boards (12), comprising an optical system (17) for detecting at least one recording of the mixture (10, 10') and an evaluation apparatus (14), wherein the optical system (17) is actively connected to the evaluation apparatus (14), wherein the evaluation apparatus (14) is constructed to produce from the at least one recording of the mixture (10, 10') at least one output characteristic line which is formed by a mathematical transformation of the at least one recording, in particular by means of a Fourier transformation, and represents a path of an intensity, preferably a standardized intensity, over a spatial frequency, and wherein the evaluation apparatus (14) is constructed to produce at least one approximation characteristic line in the evaluation apparatus (14) by means of approximation in such a manner that the at least one approximation characteristic line substantially coincides with the at least one output characteristic line or at least in areas corresponds, wherein the approximation characteristic line is based at least on a geometry of the particles or is dependent thereon, wherein from the at least one approximation characteristic line one parameter of the size distribution of the mixture can be determined, and wherein the device (13) further comprises an output unit (15) at least for output of the at least one parameter of the size distribution.

12. Device (13) according to claim 11, **characterized in that** the optical system (17) is a camera, in particular a black/white camera, wherein the camera preferably has a resolution of at least 640 x 640 pixel and/or
**in that** the device (13) comprises an apparatus for smoothing the mixture (10, 10') prior to the at least one recording and/or an external light source, in particular for homogeneous illumination of the mixture (10, 10').

13. Installation (1) for producing a material board (12) from a mixture (10) of particles, comprising apparatuses (2, 3, 4, 5, 6, 7, 8, 9) for forming a nonwoven (11) from the mixture (10, 10') or the particles and the pressing thereof to form material boards (12) and preferably for glueing the mixture (10, 10') or the particles prior to forming as the nonwoven (11), **characterized in that** the installation (1) comprises a device (13) according to any one of claims 11 or 12.

14. Installation (1) according to claim 13, **characterized in that** the optical system (17) of the device (13) is arranged with a fixed spacing relative to a surface of the mixture (10, 10') and/or a spacing of the optical system (17) with respect to a surface of the mixture (10, 10') can be detected and/or adjusted, in particular for establishment and/or depending on a recording surface of the recording and/or **in that** the optical system (17) is arranged after an apparatus (5) for producing the particles from a starting material (16), in front of and/or after an apparatus (7) for sieving, in front and of and/or after the apparatus (3) for glueing, and/or in front of and/or after the apparatus (2) for forming the nonwoven.

15. Installation (1) according to any one of claims 13 or 14, **characterized in that** the evaluation apparatus (14) is integrated in a control apparatus (20) of the installation (1) and/or
**in that** in the installation (1) apparatuses (2, 3, 4, 5, 6, 7, 8, 9) for crushing, sorting, providing a binding agent, storage, climate-control, for weighing, for monitoring and/or checking the particles and/or a starting material (16) of the particles, for pre-pressing, for adjusting the moisture, for adjusting the temperature, for adjusting the width and/or the height of the nonwoven, for measuring parameters of an educt and product parameters and/or quality parameters of the material board, for dividing and/or for stacking and/or for temperature control of the material board (12) are provided.

16. Computer program product having a computer-readable storage medium on which commands are embedded and, when they are carried out by an evaluation apparatus, result in the evaluation apparatus (14) being configured to carry out a method for determining at least one parameter of a size distribution of a mixture (10, 10') from particles during the production of material boards (12) according to any one of claims 1 to 14, in particular with a device (13) according to either of claims 11 or 12, preferably in an installation (1) according to any one of claims 13 to 15.

## Revendications

1. Procédé pour déterminer au moins un paramètre d'une distribution granulométrique d'un mélange (10, 10') de particules au cours de la fabrication de panneaux de matériau (12), comprenant les étapes de :
A. réalisation d'au moins un enregistrement du mélange (10, 10') avec un système optique (17) ;
B. transmission de l'au moins un enregistrement à un appareil d'évaluation (14) et génération d'au moins une courbe caractéristique initiale à partir de l'au moins un enregistrement, dans lequel l'au moins une courbe caractéristique initiale est formée par une transformation mathématique de l'au moins un enregistrement, de préférence par une transformation de Fourier, et représente une évolution d'une intensité, de préférence d'une intensité normalisée, sur une fréquence spatiale,
C. détermination d'au moins une courbe caractéristique approximative dans l'appareil d'évaluation (14) par approximation, de sorte que l'au moins une courbe caractéristique approximative coïncide sensiblement avec l'au moins une courbe caractéristique initiale ou correspond au moins sensiblement dans certaines zones, dans lequel l'au moins une courbe caractéristique approximative est basée au moins sur ou dépend d'une géométrie des particules, et
D. détermination de l'au moins un paramètre de la distribution granulométrique du mélange (10, 10') à partir de l'au moins une courbe caractéristique approximative et/ou de la courbe caractéristique initiale.

2. Procédé selon la revendication 1, **caractérisé en ce que** les particules du mélange (10, 10') sont des copeaux, rognures et/ou fibres et/ou **en ce que** le mélange (10, 10') est constitué au moins en partie de particules d'un matériau contenant de la lignocellulose.

3. Procédé selon l'une quelconque des revendications précédentes, **caractérisé en ce que** la réalisation d'au moins un enregistrement s'effectue en ligne, en particulier dans une installation (1) pour la fabrication de panneaux de matériau (12) et de préférence pour l'au moins un enregistrement, aucun rejet du mélange (10, 10') ou d'une partie de celui-ci et/ou **en ce qu'**un enregistrement direct du mélange (10, 10'), en particulier sans séparation, tamisage et/ou fractionnement préalable du mélange (10, 10'), est effectué.

4. Procédé selon l'une quelconque des revendications précédentes, **caractérisé en ce que** l'au moins une courbe caractéristique d'approximation est basée sur une courbe de base paramétrique qui présente l'au moins un paramètre de la distribution granulométrique en tant que variable ou à partir des variables de laquelle l'au moins un paramètre de la distribution granulométrique est déterminé.

5. Procédé selon l'une des revendications précédentes, **caractérisé en ce que** l'au moins une courbe caractéristique approximative est déterminée par une pondération d'au moins deux courbes caractéristiques de référence, dans lequel les courbes caractéristiques de référence sont fournies dans l'appareil d'évaluation et chaque courbe caractéristique de référence représente une courbe caractéristique pour un mélange de référence de particules, dans lequel l'au moins un paramètre de la distribution granulométrique est déterminé à partir de la pondération des courbes caractéristiques de référence.

6. Procédé selon la revendication 5, **caractérisé en ce que** la courbe caractéristique de référence est déterminée à partir d'au moins un enregistrement de référence, dans lequel l'enregistrement de référence est de préférence un enregistrement d'un mélange de référence réel ou un enregistrement générée artificiellement d'un mélange de référence, dans lequel le mélange de référence est en particulier conçu en tant que mélange de particules d'une seule taille ou d'une seule catégorie de taille et/ou
**en ce qu'**au moins une courbe de référence est formée par une transformation mathématique de l'enregistrement de référence, en particulier par une transformation de Fourier, dans lequel la courbe de référence représente une courbe d'intensité, de préférence une intensité normalisée, en fonction de la fréquence spatiale.

7. Procédé selon l'une quelconque des revendications précédentes 5 ou 6, **caractérisé en ce qu'**au moins cinq courbes de référence, de préférence au moins sept courbes de référence, le plus préférentiellement au moins dix courbes de référence, sont fournies ou déterminées dans l'appareil d'évaluation.

8. Procédé selon l'une quelconque des revendications précédentes, **caractérisé en ce que** l'au moins un enregistrement est effectué lorsque le mélange (10, 10') est transporté, en particulier lorsque le mélange (10, 10') est dispersé sur un appareil de transport et/ou forme un rideau de particules, et/ou
**en ce que** le mélange (10, 10') est dispersé pour être recueilli sur un appareil de transport et/ou que le mélange (10, 10') présente une surface sensiblement plane lors d'au moins une collecte et est en particulier lissé avant ladite au moins une collecte et/ou **en ce que** le mélange (10, 10') est éclairé, de préférence de manière homogène, en particulier par une source de lumière externe.

9. Procédé selon l'une quelconque des revendications précédentes, **caractérisé en ce que** l'au moins un enregistrement est traité avant la création de l'au moins une courbe caractéristique initiale et/ou l'enregistrement de référence est traité avant la création de la courbe caractéristique de référence et/ou **en ce que** seule une partie de l'au moins un enregistrement et/ou de l'enregistrement de référence est utilisée pour la création de l'au moins une courbe caractéristique initiale et/ou de la courbe caractéristique de référence.

10. Procédé selon l'une quelconque des revendications précédentes, **caractérisé en ce que** la détermination de l'au moins une courbe caractéristique approximative est effectuée au moyen d'un algorithme d'optimisation, et/ou **en ce que** le système optique (17) comprend une caméra, laquelle présente en particulier une résolution d'au moins 640 x 640 pixels et/ou **en ce que** l'au moins une courbe caractéristique initiale, l'au moins une courbe caractéristique approximative et/ou l'au moins un paramètre de la distribution granulométrique sont affichés sur un affichage (21) d'une unité initiale (15).

11. Dispositif (13) pour déterminer un paramètre d'une distribution granulométrique d'un mélange (10) de particules au cours de la fabrication de panneaux de matériau (12), comprenant un système optique (17) pour enregistrer au moins un enregistrement du mélange (10, 10') et un appareil d'évaluation (14), dans lequel le système optique (17) est connecté de manière fonctionnelle à l'appareil d'évaluation (14), dans lequel l'appareil d'évaluation (14) est conçu pour générer, à partir d'au moins un enregistrement du mélange (10, 10') pour générer au moins une courbe caractéristique initiale, laquelle est formée par une transformation mathématique de l'au moins un enregistrement, en particulier par une transformation de Fourier, et représente une évolution d'une intensité, de préférence d'une intensité normalisée, sur une fréquence spatiale, et dans lequel l'appareil d'évaluation (14) est conçu pour générer au moins une courbe caractéristique approximative dans l'appareil d'évaluation (14) par approximation de sorte que l'au moins une courbe caractéristique approximative coïncide sensiblement avec l'au moins une courbe caractéristique initiale ou concorde au moins dans certaines zones, dans lequel la courbe caractéristique d'approximation est basée sur au moins une géométrie des particules ou dépendant de celle-ci, dans lequel le paramètre de la distribution granulométrique du mélange peut être déterminé à partir de l'au moins une courbe caractéristique d'approximation, et dans lequel le dispositif (13) comprend en outre une unité initiale (15) au moins pour l'émission de l'au moins un paramètre de la distribution granulométrique.

12. Dispositif (13) selon la revendication 11, **caractérisé en ce que** le système optique (17) est une caméra, en particulier une caméra noir/blanc, dans lequel la caméra présente de préférence une résolution d'au moins 640 x 640 pixels et/ou **en ce que** le dispositif (13) comprend un appareil pour lisser le mélange (10, 10') avant l'au moins un enregistrement et/ou une source de lumière externe, en particulier pour l'éclairage homogène du mélange (10, 10').

13. Installation (1) pour la fabrication d'un panneau de matériau (12) à partir d'un mélange (10) de particules, comprenant des appareils (2, 3, 4, 5, 6, 7, 8, 9) pour former un non-tissé (11) à partir du mélange (10, 10') ou des particules et pour le presser en panneaux de matériau (12) ainsi que, de préférence, pour encoller le mélange (10, 10') ou les particules avant le formage en non-tissé (11), **caractérisée en ce que** l'installation (1) comprend un dispositif (13) selon l'une quelconque des revendications 11 ou 12.

14. Installation (1) selon la revendication 13, **caractérisée en ce que** le système optique (17) du dispositif (13) est disposé à une distance fixe d'une surface du mélange (10, 10') et/ou **en ce qu'**une distance entre le système optique (17) et une surface du mélange (10, 10') est détectable et/ou réglable, en particulier pour la détermination et/ou en fonction d'une surface de réception de l'enregistrement et/ou
**en ce que** le système optique (17) est disposé en amont d'un appareil (5) pour la génération des particules à partir d'un matériau initial (16), avant et/ou après un appareil (7) destiné au tamisage, avant et/ou après l'appareil (3) destiné à l'encollage, et/ou avant et/ou après l'appareil (2) destiné au formage du non-tissé.

15. Installation (1) selon l'une quelconque des revendications 13 ou 14, **caractérisée en ce que** l'appareil d'évaluation (14) est intégré dans un appareil de commande (20) de l'installation (1) et/ou
**en ce que** des appareils (2, 3, 4, 5, 6, 7, 8, 9) sont prévus dans l'installation (1) pour le broyage, le tri, la mise à disposition d'un liant, le stockage, la climatisation, la pesée, la surveillance et/ou le contrôle des particules et/ou d'une matière première (16) des particules, pour le pré-pressage, pour le réglage de l'humidité, pour le réglage de la température, pour le réglage de la largeur et/ou de la hauteur du non-tissé, pour la mesure de paramètres d'un éduct et de paramètres de produit et/ou de paramètres de qualité du panneau de matériau, pour la répartition et/ou l'empilage et/ou la mise à température du panneau de matériau (12).

16. Produit de programme informatique avec un support de stockage lisible par ordinateur sur lequel des instructions sont intégrées qui, lorsqu'elles sont exécutées par un appareil d'évaluation, font en sorte que l'appareil d'évaluation (14) soit configuré pour exécuter un procédé de détermination d'au moins un paramètre d'une distribution granulométrique d'un mélange (10, 10') de particules au cours de la fabrication de panneaux de matériau (12) selon l'une quelconque des revendications 1 à 14, en particulier avec un dispositif (13) selon l'une quelconque des revendications 11 ou 12, de préférence dans une installation (1) selon l'une quelconque des revendications 13 à 15.
